**Europäisches Patentamt**

**European Patent Office**

**Office européen des brevets**

(11) Numéro de publication : **0 630 870 A1**

## (12) DEMANDE DE BREVET EUROPEEN

(21) Numéro de dépôt : **94401401.8**

(22) Date de dépôt : **22.06.94**

(51) Int. Cl.⁵ : **C04B 26/08, C25B 11/03, C25B 11/04**

(30) Priorité : **25.06.93 FR 9307742**

(43) Date de publication de la demande :
**28.12.94 Bulletin 94/52**

(84) Etats contractants désignés :
**BE DE ES FR GB GR IT NL SE**

(71) Demandeur : **RHONE-POULENC CHIMIE**
**25, Quai Paul Doumer**
**F-92408 Courbevoie Cédex (FR)**

(72) Inventeur : **Bachot, Jean**
**9 rue Jean Roger Thorelle**
**F-92340 Bourg la Reine (FR)**
Inventeur : **Kuntzburger, Frédéric**
**Bât Cèdre Résidence Hauts de St Nicolas**
**F-95130 Le Plessis Bouchard (FR)**

(74) Mandataire : **Dubruc, Philippe et al**
**RHONE-POULENC CHIMIE,**
**Direction de la Propriété Industrielle,**
**25, Quai Paul Doumer**
**F-92408 Courbevoie Cédex (FR)**

(54) **Elément cathodique dépourvu de fibres d'amiante.**

(57)    Matériau microporeux électroconducteur comprenant une nappe fibreuse, dépourvue d'amiante, caractérisé en ce que ladite nappe comprend des fibres de carbone ou de graphite, des fibres de polytétrafluoroéthylène, des fibres minérales inertes, au moins un polymère fluoré liant des fibres et le cas échéant, au moins un épaississant.

Elément cathodique comprenant ledit matériau et association de cet élément cathodique avec un diaphragme ou une membrane.

Utilisation de cette association dans une cellule d'électrolyse de solutions aqueuses d'halogénures alcalins.

EP 0 630 870 A1

La présente invention a pour objet un matériau microporeux électroconducteur utilisable notamment pour la réalisation de l'élément cathodique d'une cellule d'électrolyse, et en particulier d'une cellule d'électrolyse de solutions d'halogénures alcalins. Elle concerne également l'élément cathodique comprenant ledit matériau.

L'invention s'applique aussi au procédé de fabrication dudit matériau.

L'invention concerne enfin l'association dudit élément cathodique avec un diaphragme ou une membrane.

Elle a trait enfin à l'utilisation de cette association dans une cellule d'électrolyse de solutions aqueuses d'halogénures alcalins.

Les solutions aqueuses d'halogénures alcalins généralement électrolysées sont celles de chlorure de sodium pour obtenir du chlore et de la soude.

On sait que les matériaux utilisés pour la réalisation de l'élément cathodique d'une cellule d'électrolyse doivent répondre à plusieurs qualités : ils doivent présenter une résistivité électrique faible compatible avec le fonctionnement de l'électrolyseur équipé d'un tel élément cathodique à un niveau énergétique acceptable, ils doivent également présenter une épaisseur faible (d'environ 0,1 à 10 mm), alors qu'ils doivent présenter une surface importante qui peut dépasser plusieurs mètres carrés.

De plus, ces matériaux doivent pouvoir être obtenus par dépôt sur une structure rigide qui présente des taux d'ouverture et des diamètres de trous importants.

Ces matériaux sont généralement obtenus par filtration sous vide d'une suspension de fibres et de liants.

Les propriétés d'un tel matériau dépendent d'un certain nombre de paramètres, notamment de la nature et de la concentration des matières fibreuses en suspension, des tensioactifs, des porogènes et additifs divers.

Ainsi, pour réunir ces qualités, il est connu d'utiliser une matière fibreuse constituée d'un mélange de fibres conductrices et non-conductrices tel que notamment décrit dans la demande de brevet européen EP 0 319 517. Dans cette demande de brevet, il est plus particulièrement préconisé le mélange de fibres d'amiante et de fibres de carbone, les fibres de carbone apportant à l'élément cathodique l'électroconductivité, et les fibres d'amiante permettant de fixer les liants lors de la filtration.

Divers perfectionnements ont été apportés tant au dit matériau qu'à son procédé de fabrication.

Dans la demande de brevet européen EP 0 214 066 déposée au nom de la Demanderesse, il a été proposé des matériaux renfermant des fibres de carbone présentant une distribution monodispersée de longueurs, matériaux dont la qualité et les propriétés sont très sensiblement améliorées, ce qui se traduit par un rapport performance/épaisseur beaucoup plus favorable.

Dans la demande de brevet européen EP 0 296 076 déposée au nom de la Demanderesse, il a été proposé des matériaux électroactivés renfermant un agent électrocatalytique uniformément réparti dans leur masse, ledit agent étant choisi parmi les métaux de Raney et les alliages de Raney dont on a éliminé la majeure partie du (des) métal (métaux) facilement éliminable(s).

L'ensemble des éléments cathodiques proposés qui assurent une répartition appréciable du courant est susceptible d'être utilisé dans une cellule d'électrolyse qui comprendra en outre une membrane ou un diaphragme séparant les compartiments anodique et cathodique. Des détails techniques complémentaires pourront être trouvés dans les demandes de brevets européens précitées.

Toutefois, la qualité des éléments cathodiques décrits et connus de l'état de la technique n'est pas pleinement satisfaisante en raison de la nécessité d'utiliser des fibres d'amiante. En effet, en plus des risques associés à la manipulation de ce produit dangereux pour la santé humaine, la stabilité chimique insuffisante inhérente à l'amiante implique divers inconvénients tels qu'une durée de vie trop courte pour l'électrolyseur comprenant cet élément cathodique et des difficultés à modifier les conditions de fonctionnement de l'électrolyseur, par exemple, par une augmentation de l'intensité électrique et/ou de la concentration en hydroxyde de métal alcalin.

Dans la demande de brevet EP 0 222 671 déposée au nom de la Demanderesse, il est décrit dans un exemple la fabrication d'une précathode sans amiante à partir d'une suspension ne contenant que des fibres de carbone conductrices. Cependant, la composition de la suspension pour cette fabrication ne permet pas d'assurer industriellement à la nappe une porosité à la fois fine et régulière et une très grande cohésion à la cathode.

Il a maintenant été trouvé qu'il est possible de préparer des matériaux dépourvus d'amiante utilisables notamment pour la réalisation d'élément cathodique d'une cellule d'électrolyse de solutions d'halogénures alcalins, ces matériaux ne présentant pas les inconvénients précités.

La présente invention a donc pour objet un matériau microporeux électroconducteur comprenant une nappe fibreuse, dépourvue d'amiante, caractérisé en ce que ladite nappe comprend des fibres de carbone ou de graphite, des fibres de polytétrafluoroéthylène, des fibres minérales inertes, au moins un polymère fluoré liant des fibres et le cas échéant, au moins un épaississant.

L'invention couvre également l'élément cathodique comprenant ledit matériau.

L'invention a enfin pour objet un procédé de préparation de matériau microporeux électroconducteur, caractérisé en ce qu'il comprend les étapes suivantes :

a) préparation d'une suspension aqueuse comprenant environ :

. 100 parties en poids sec d'un mélange de fibres constitué par 20 à 80 parties en poids sec de fibres de carbone ou de graphite et par 80 à 20 parties en poids sec de fibres de polytétrafluoroéthylène;

. 10 à 100 parties en poids sec de fibres minérales inertes;

. 10 à 60 parties en poids sec de polymère fluoré liant des fibres;

. 30 à 200, de préférence de 30 à 100, parties en poids sec de dérivés à base de silice;

. 0 à 30 parties en poids sec d'au moins un épaississant;

b) dépôt d'une nappe par filtration sous vide programmé de ladite suspension à travers un support poreux;

c) élimination du milieu liquide et séchage de la nappe ainsi formée;

d) frittage de la nappe;

e) élimination des dérivés à base de silice.

Le matériau microporeux électroconducteur susceptible d'être préparé par ce procédé constitue un matériau microporeux électroconducteur préféré de la présente invention.

Par "matériau microporeux électroconducteur", on entend selon l'invention des matériaux microporeux qui présentent une résistivité électrique comprise généralement entre 0,5 et 15 $\Omega$.cm. Pour des raisons de consommation énergétique, cette résistivité est de préférence comprise entre 0,5 et 10 $\Omega$.cm et de manière encore plus préférentielle comprise entre 0,5 et 2 $\Omega$.cm.

De manière encore plus préférentielle dans le procédé de la présente invention, le mélange de fibres de carbone ou de graphite et de fibres de polytétrafluoroéthylène est constitué par 60 à 80 parties en poids sec de fibres de carbone ou de graphite et par 40 à 20 parties en poids sec de fibres de polytétrafluoroéthylène.

Avantageusement, les quantités de fibres minérales inertes et le cas échéant d'épaississant, mises en oeuvre lors du procédé et présentes dans la nappe fibreuse selon la présente invention sont respectivement comprises entre 20 et 60 parties en poids sec et 0 et 10 parties en poids sec.

En pratique, la suspension aqueuse préparée à l'étape a) du procédé selon la présente invention est une suspension à environ 2 à 5 % en poids de matière sèche.

Le matériau, l'élément cathodique et le procédé de préparation dudit matériau selon l'invention comportent ou mettent en oeuvre, comme il l'a été stipulé ci-dessus, un certain nombre d'éléments qui vont maintenant être étudiés plus précisément. Pour tout le reste de la description, tout ce qui est décrit au sujet desdits éléments s'applique tant au matériau, à l'élément cathodique ou au diaphragme qu'au procédé qui utilisent ces éléments.

Les fibres de polytétrafluoroéthylène, ci-après dénommées fibres de PTFE, utilisées dans le cadre de la présente invention peuvent présenter des dimensions variables : leur diamètre (D) est généralement compris entre 10 et 500 $\mu$m et leur longueur (L) est telle que le rapport L/D soit compris entre 5 et 500. De préférence, on recourt à des fibres de PTFE dont les dimensions moyennes sont comprises entre 1 et 10 mm pour la longueur et entre 50 et 200 $\mu$m pour le diamètre. Leur préparation est décrite dans le brevet américain n° 4 444 640 et ce type de fibres de PTFE est connu de l'homme du métier.

Les fibres de carbone ou de graphite se présentent sous forme de filaments dont le diamètre est généralement inférieur à 1 mm et, de préférence, compris entre $10^{-5}$ et 0,1 mm et dont la longueur est supérieure à 0,5 mm et, de préférence, comprise entre 1 et 20 mm.

De préférence, ces fibres de carbone ou de graphite présentent une distribution de longueurs monodispersées, c'est à dire une distribution de longueurs telles que la longueur d'au moins 80 % et, avantageusement d'au moins 90 %, des fibres correspond à la longueur moyenne à $\pm$ 20 % près, et de préférence à $\pm$ 10 % près.

Par "fibres minérales inertes", on entend selon l'invention toute fibre minérale inerte chimiquement vis-à-vis des produits formés lors de l'utilisation du matériau dans une cellule d'électrolyse. Ces fibres ont notamment pour rôle d'apporter une consolidation, un renforcement du diaphragme, sans pénaliser toutefois le matériau en ce qui concerne sa mouillabilité et sa conductivité. Ainsi, lors d'une utilisation du matériau dans une cellule d'électrolyse de solutions de chorure de sodium, les fibres minérales employées doivent être notamment inertes vis-à-vis de la soude formée.

On utilise de préférence des fibres de titanate, des fibres de sulfoaluminate de calcium (fibres d'ettringite), des fibres céramiques (telles que des fibres de dioxyde de zirconium, de carbure de silicium, de nitrure de bore), des fibres de suboxydes de titane de formule chimique générale $Ti_nO_{2n-1}$ avec n, nombre entier, compris entre 4 et 10 (du type Ebonex ™ fabriqué et commercialisé par la société ICI) seules ou en mélange. On utilise plus particulièrement des fibres de titanate.

Les fibres de titanate sont des matériaux connus. Ainsi, les fibres de titanate de potassium sont disponibles dans le commerce. D'autres fibres dérivant de l'octatitanate de potassium $K_2Ti_8O_{17}$ par remplacement partiel des ions titane au degré d'oxydation IV par des cations magnésium et nickel, ou au degré d'oxydation III tels les cations fer ou chrome et par compensation de charge assurée par des ions alcalins tels les cations sodium et potassium, sont décrites dans la demande de brevet français n° 2 555 207.

D'autres fibres de titanate telles celles en tétratitanate de potassium ($K_2Ti_4O_9$) ou ses dérivés peuvent être utilisées.

Il est en outre possible d'utiliser des composés à base de fibres de cellulose auxquelles on a donné une charge ionique positive. De tels composés sont notamment commercialisés par la société BECO, sous la dénomination Becofloc®. La quantité de ces composés mise en oeuvre est plus particulièrement comprise entre 0 à 100 parties en poids sec.

Par "épaississant", on entend selon la présente invention un composé qui augmente la viscosité de la solution et qui présente des propriétés rétentrices d'eau. On utilise généralement des polysaccharides naturels ou synthétiques. On peut notamment citer les biopolymères obtenus par fermentation d'un hydrate de carbone sous l'action de micro-organismes. On utilise avantageusement la gomme xanthane. La gomme xanthane est synthétisée à l'aide de bactéries appartenant au genre Xanthomonas et plus particulièrement aux espèces décrites dans Bergey's manual of determination bacteriology (8ème édition - 1974 - Williams N. Wilkins C° Baltimore) telles que Xanthomonas begoniae, Xanthomonas campestris, Xanthomonas carotae, Xanthomonas hederae, Xanthomonas incanae, Xanthomonas malvacearum, Xanthomonas papavericola, Xanthomonas phaseoli, Xanthomonas pisi, Xanthomonas vasculorum, Xanthomonas vesicatoria, Xanthomonas vitians, Xanthomonas pelargonii. L'espèce Xanthomonas campestris convient tout particulièrement bien pour la synthèse de la gomme xanthane.

Parmi les autres micro-organismes capables de produire des polysaccharides de propriétés similaires, on peut citer les bactéries appartenant au genre Arthrobacter, au genre Erwinia, au genre Azobacter, au genre Agrobacter ou les champignons appartenant au genre Sclerotium.

La gomme xanthane peut être obtenue par tout moyen connu en soi. Conventionnellement, le polysaccharide est isolé du moût de fermentation par évaporation, séchage et broyage ou par précipitation au moyen d'un alcool inférieur, séparation du liquide, séchage et broyage de façon à obtenir une poudre. Les poudres disponibles commercialement ont une granulométrie généralement comprise entre 50 et 250 µm et une densité apparente supérieure à environ 0,7.

Le liant du matériau microporeux électroconducteur conforme à l'invention est constitué par des polymères fluorés.

Par "polymères fluorés", on entend les homopolymères ou des copolymères dérivés au moins en partie de monomères oléfiniques substitués par des atomes de fluor, ou substitués par une combinaison d'atomes de fluor et de l'un au moins des atomes de chlore, de brome ou d'iode par monomère.

Des exemples d'homopolymères ou de copolymères fluorés peuvent être constitués par les polymères et copolymères dérivés de tétrafluoroéthylène, hexafluoropropylène, chlorotrifluoroéthylène, bromotrifluoroéthylène.

De tels polymères peuvent également comprendre jusqu'à 75 % molaire de motifs dérivés d'autres monomères éthyléniquement insaturés contenant au moins autant d'atomes de fluor que d'atomes de carbone, comme par exemple le (di)fluorure de vinylidène, les esters de vinyle et de perfluoroalkyle, tel que le perfluoroalcoxyéthylène.

Le polymère fluoré se présente avantageusement selon l'invention sous forme d'une dispersion aqueuse renfermant, en général, de 30 à 70 % de polymère sec, de granulométrie comprise entre 0,1 et 5 micromètres et de préférence entre 0,1 et 1 micromètre.

De préférence, le polymère fluoré utilisé est un polytétrafluoroéthylène.

Par "dérivés à base de silice", on entend selon l'invention les silices précipitées et les silices de combustion ou pyrogénées.

De manière avantageuse, les silices présentent une surface spécifique BET comprise entre 100 $m^2/g$ et 300 $m^2/g$ et/ou une granulométrie évaluée au compteur COULTER® entre 1 et 50 µm et, de préférence, entre 1 et 15 µm.

Ces dérivés se comportent comme d'excellents agents porogènes n'apportant pratiquement pas de déconsolidation du matériau microporeux électroconducteur lorsqu'ils sont utilisés dans les quantités de la présente invention. Ces dérivés sont également des agents formant des réseaux de latex constitué par le liant présent.

L'élimination des dérivés à base de silice peut être réalisée par attaque en milieu alcalin. Cette élimination crée la microporosité du matériau selon la présente invention. Cette élimination des dérivés à base de silice peut se faire avant l'utilisation du matériau microporeux électroconducteur en électrolyse, mais, de manière pratique et avantageuse, les dérivés à base de silice peuvent être éliminés "in situ" dans l'électrolyseur par dissolution en milieu alcalin notamment pendant les premières heures d'électrolyse. Ainsi, l'élimination est avantageusement réalisée au contact d'une solution aqueuse d'hydroxyde de sodium dont la concentration est comprise entre 40 et 200 g/l et à une température comprise entre 20 et 95 °C.

Dans la présente invention, on ajoute, de préférence, lors de la préparation de la suspension à l'étape a) au moins un tensioactif. La quantité maximale de tensioactif présent est généralement de 10 parties en poids sec, de préférence la quantité de tensioactif est comprise entre 0,5 et 5 parties en poids sec. De préférence, on utilise un tensioactif non ionique. Comme tensioactif non ionique, on peut notamment utiliser des alcools éthoxylés ou des composés fluorocarbonés à groupes fonctionnalisés seuls ou en mélange ; ces alcools ou ces composés fluorocarbonés présentent généralement des chaînes carbonées de $C_6$ à $C_{20}$. De préférence, on utilise des alcools éthoxylés qui sont des alkylphénols éthoxylés, tels que notamment les octoxynols.

D'autres éléments peuvent être ajoutés à la suspension de l'étape a) du procédé selon la présente invention. Ainsi, ces additifs peuvent notamment correspondre à des agents électrocatalytiques choisis dans le groupe constitué par les métaux de Raney et les alliages dont on va éliminer la majeure partie du (des) métal (métaux) facilement éliminable(s), et leurs mélanges. Des matériaux électroactivés renfermant un agent électrocatalytique de ce type est décrite dans la demande de brevet européen n° 0 296 076 déposée par la Demanderesse.

Selon le procédé de la présente invention, la nappe est donc formée par filtration sous vide programmé de ladite suspension à travers un support poreux. Ces supports poreux peuvent notamment être des toiles ou des grilles dont le vide de maille, les perforations ou la porosité peuvent être compris entre 20 μm et 5 mm. Ces supports poreux peuvent présenter une ou plusieurs surfaces planes ou cylindriques, appelé communément "doigt de gant", présentant une surface ouverte.

Dans le cas où le matériau microporeux électroconducteur selon l'invention est utilisé dans les cellules d'électrolyse d'halogénures alcalins ou plus spécifiquement de chlorure de sodium, le matériau microporeux électroconducteur peut être associé à un support métallique qui constitue la cathode élémentaire. On parle ainsi plus particulièrement d'élément cathodique ou encore d'électrode volumique. Par ces termes, on entend un support rigide métallique dont la fonction est seulement d'amener l'électricité et un matériau microporeux électroconducteur qui remplit la fonction cathodique.

Cet assemblage matériau microporeux électroconducteur/support métallique peut se faire de différentes manières. La première manière de procéder est de fabriquer tout d'abord la nappe tel que décrit aux étapes a) à c) du procédé de préparation du matériau microporeux électroconducteur selon la présente invention, puis d'appliquer cette nappe sur le support métallique qui constitue la cathode élémentaire et ensuite de fritter l'ensemble. Selon une autre variante préférée, car plus simple de mise en oeuvre, on filtre directement la suspension décrite à l'étape a) du procédé de préparation du matériau microporeux électroconducteur selon la présente invention à travers le support métallique qui constitue la cathode élémentaire.

Ainsi, le procédé selon l'invention est particulièrement avantageux dans le cas où l'on désire préparer un élément cathodique. Cet élément cathodique comprend ainsi une structure rigide électroconductrice, tel qu'un support poreux métallique, sur laquelle se trouve le matériau microporeux électroconducteur selon la présente invention.

Dans le cas où l'élément cathodique est utilisé dans les cellules d'halogénures alcalins ou plus spécifiquement de chlorure de sodium, l'élément cathodique peut être associé à un diaphragme ou une membrane, jouant le rôle de séparateur entre la cathode et l'anode dans une cellule d'électrolyse.

Dans le cas d'une membrane, laquelle peut être choisie parmi les nombreuses membranes d'électrolyse décrites dans la littérature, l'élément cathodique selon l'invention constitue un excellent support mécanique et assure une bonne répartition du courant. Cette répartition du courant est liée à la structure particulière de l'élément cathodique conforme à l'invention.

L'élément cathodique peut donc également être lié à un diaphragme.

Le diaphragme est constitué de fibres microconsolidées sous forme de nappe. Ce diaphragme, qui peut aussi être choisi parmi les nombreux diaphragmes pour électrolyse maintenant connus, peut être fabriqué séparément. Il peut aussi, et ceci est une modalité avantageuse, être fabriqué directement sur la nappe de fibres que constitue le matériau microporeux électroconducteur.

Les diaphragmes préférentiellement utilisés sont ceux décrits dans les demandes de brevets EP 0 412 916 et 0 412 917 déposées par la Demanderesse. On utilise avantageusement le diaphragme sans amiante décrit dans la demande de brevet EP 0 412 917.

Il est clair que l'association en cause est en quelque sorte un empilement d'une face vers l'autre de trois couches, à savoir le support métallique poreux, le matériau microporeux électroconducteur et la membrane ou le diaphragme, ledit empilement formant un ensemble cohérent.

Les différents programmes de vide décrits auparavant peuvent être réalisés en continu ou par paliers, de la pression atmosphérique à la pression finale qui se situe à environ 0,01 à 0,5 bar absolu.

Le frittage est généralement réalisé à une température supérieure au point de fusion ou de ramollissement des polymères fluorés, liants des fibres. Ce frittage permet la consolidation de la nappe précédemment mentionnée.

Dans ce qui suit ou ce qui précède, les pourcentages exprimés sont en poids, sauf mention contraire. Des exemples concrets mais non limitatifs vont maintenant être donnés.

## EXEMPLE COMPARATIF 1

### Préparation de matériau microporeux électroconducteur avec fibres d'amiante

On prépare une suspension à partir de :
- eau permutée, dont la quantité est calculée pour obtenir environ 4 litres de suspension et un extrait sec d'environ 4,8 % en poids,
- 30 g de fibres d'amiante chrysotile dont la longueur moyenne est 1 à 5 mm et dont le diamètre est de 200 Angström environ,
- 2,1 g de gomme xanthane.

Après agitation rotative de quelques minutes, on ajoute :
- 35 g de polytétrafluoroéthylène sous forme de latex à 60% d'extrait sec,
- 100 g de silice précipitée sous forme de particules de granulométrie moyenne de 3 mm et dont la surface B.E.T. est de 250 $m^2.g^{-1}$,
- 70 g de fibres de carbone dont le diamètre est d'environ 10 mm et dont la longueur moyenne est de 1,5 mm,
- 3,3 g de Triton X 100 ® de la société Rohm et Haas,
- 121 g de nickel de Raney sous forme de poudre de 10 mm (Ni 20 commercialisé par la Société Procatalyse).

Après agitation, on dépose par filtration, sous vide programmé et préétabli, sur un grillage de fer tressé et laminé d'acier type "Gantois" dont l'ouverture est de 2 mm et dont le diamètre de fils est de 1 mm, la surface efficace étant de 1,21 $dm^2$.

La dépression est donc établie et croit de 50 mbars par minute pour atteindre environ 800 mbars. Cette dépression maximale est maintenue pendant environ 15 minutes.

L'ensemble est alors séché, puis consolidé par fusion du polymère fluoré.

La silice est éliminée "in situ" dans l'électrolyseur par dissolution en milieu alcalin notamment pendant les premières heures d'électrolyse.

Les caractéristiques du dépôt de la suspension sont les suivantes :
- le temps d'écoulement est de 200-300 s,
- le taux d'arrêt est d'environ 70%,
- le vide final est de 200 à 300 mbar,
- l'épaisseur est de 1,5 à 2,5 mm,
- la résistivité électrique est de 0,5 à 2 $\Omega$.cm.

Le temps d'écoulement correspond au temps nécessaire pour filtrer la totalité de la suspension (le vide étant programmé, le temps d'écoulement devient un paramètre caractérisant le dépôt et dépendant de la suspension filtrée).

La dépression maximale atteinte par le système est maintenue pendant 15 minutes environ, cette phase correspond à l'essorage de la nappe ainsi formée. A la fin de cette phase d'essorage, la dépression se maintient à un niveau stationnaire, appelé vide final. Ce vide final est également un paramètre caractérisant le dépôt et dépendant de la suspension filtrée, il est plus particulièrement représentatif de la structure poreuse de la nappe déposée.

Le taux d'arrêt est constaté par simple bilan des matières par pesée.

Après séchage ou consolidation, la nappe formée peut être détachée de la grille sur laquelle s'est effectuée le dépôt. La résistivité électrique peut alors être mesurée au moyen d'un ohmmètre relié à deux plaques métalliques conductrices du courant, elles-mêmes étant appliquées sur les faces opposées de la nappe.

### Préparation de l'association de l'élément cathodique avec amiante et d'un diaphragme sans amiante

On dépose sur l'élément cathodique (diaphragme microporeux + grillage) ainsi préparé une nappe en vue de préparer un diaphragme dans les conditions données dans les exemples de la demande de brevet EP 0 412 917 déposée par la Demanderesse.

La suspension de départ, pour préparer ce diaphragme, est la suivante :
- 100 g de fibres de polytétrafluoroéthylène (= PTFE) introduites sous forme de 200 g d'un mélange de chlorure de sodium et de fibres de PTFE (50/50 en poids) traitée au préalable, comme décrit ci-après,
- 60 g de fibres titanate de potassium de diamètre de 0,2 à 0,5 mm et de longueur de 10 à 20 mm,

- 40 g de polytétrafluoroéthylène sous forme de latex à environ 65 % en poids d'extrait sec,
- 50 g de silice précipitée sous forme de particules de granulométrie moyenne de 3 mm et dont la surface B.E.T. est de 250 m2/g,
- 3,6 g de triton X 100 ® de la société Rohm et Haas.

Les fibres de PTFE imprégnées de NaCl sont préalablement traitées par mixage d'une solution d'un litre d'eau comprenant environ 100 g d'un mélange renfermant environ 50 % de fibres de PTFE et 50 % de chlorure de sodium. Cette opération est éventuellement répétée de manière à obtenir la quantité voulue de fibres de PTFE.

On a alors évalué les performances de l'association ainsi fabriquée dans une cellule d'électrolyse qui présente les caractéristiques et dont les conditions de fonctionnement sont indiquées ci-après :

. Anode en titane déployé, laminé, revêtu de $TiO_2$-$RuO_2$

. Elément cathodique en acier doux tressé et laminé ; fils de 2 mm, maille de 2 mm recouvert du matériau microporeux électroconducteur et du diaphragme

. Distance anode-association de 6 mm

. Surface active de l'électrolyseur de 0,5 dm2

. Cellule assemblée selon le type filtre-presse

. Densité de courant de 25 A.dm$^{-2}$

. Température de 85°C

. Fonctionnement à chlorure anodique constant de 4,8 mole.l$^{-1}$

. Titre de la soude électrolytique de 120 ou 200 g/l

Les conditions particulières et les résultats obtenus sont rassemblés dans le tableau (III) ci-après :

. RF : rendement Faraday

. $\Delta U$ : tension aux bornes de l'électrolyseur sous la densité de courant spécifiée

. performance (kwh/TCl$_2$) correspond à la consommation énergétique du système en kilowattheure par tonne de chlore produit

. $\Delta U_{I \rightarrow 0}$ correspond à la tension d'électrolyse à 85°C et I = 0 par extrapolation de la courbe U = f(I)

## EXEMPLE COMPARATIF 2

### Préparation de matériau microporeux électroconducteur à base de fibres de carbone

On prépare de la même manière que dans l'exemple comparatif 1 un matériau microporeux électroconducteur à partir d'une suspension comprenant :

- 7000 g d'eau permutée,
- 100 g de fibres de graphite dont la longueur est de 1 à 2 mm,
- 1 g de dioctylsulfosuccinate de Na,
- 35 g de polytétrafluoroéthylène sous forme de latex à environ 65 % en poids d'extrait sec,
- 100 g de silice précipitée sous forme de particules de granulométrie moyenne de 3 mm et dont la surface B.E.T. est de 250 m2.g-1
- 235 g d'alliage de Raney.

Les caractéristiques du dépôt de la suspension sont les suivantes :

- le temps d'écoulement est inférieur à 100 s,
- le taux d'arrêt est d'environ 80%,
- le vide final est inférieur à 200 mbar.

Les valeurs de temps d'écoulement et de vide final sont faibles. Cela se traduit par la formation d'un matériau microporeux électroconducteur d'épaisseur trop élevée et fortement non uniforme sur toute sa surface.

## EXEMPLES COMPARATIFS 3 à 8

### Préparation de matériau microporeux électroconducteur dépourvu de fibres minérales inertes et de fibres d'amiante

On prépare de la même manière que dans l'exemple comparatif 1 un matériau microporeux électroconducteur à partir d'une suspension comprenant :

- 30 g de fibres de PTFE introduites sous forme d'un mélange de chlorure de sodium et de fibres de PTFE (50/50 en poids) traitées au préalable, comme décrit précédemment,
- 70 g de fibres de carbone dont le diamètre est d'environ 10 mm et dont la longueur moyenne est de 1,5 mm,

- 15 ou 35 g de polytétrafluoroéthylène sous forme de latex à environ 65 % en poids d'extrait sec,
- 50 ou 100 g de silice précipitée sous forme de particules de granulométrie moyenne de 3 mm et dont la surface B.E.T. est de 250 m2.g-1
- du nickel de Raney
- 9 ou 16 g de gomme xanthane (Rhodopol ® 23 commercialisé par Rhône-Poulenc), ce qui correspond respectivement à 0,06 ou 0,10 % de titre massique dans l'eau
- 0 ou 3,3 g de triton X 100 ® de la société Rohm et Haas.

Les caractéristiques du dépôt de la suspension sont rassemblées dans le tableau suivant (I).

| | composition de la suspension | | | | | | conditions de dépôt | | | caractéristiques | |
|---|---|---|---|---|---|---|---|---|---|---|---|
| ex. | xanthane (g) | latex PTFE (g) | silice (g) | triton (g) | Ni de Raney (g) | Pds (g) | taux d'arrêt (%) | T (s) | V (mbar) | E (mm) | $\varrho$ ($\Omega$.cm) |
| 3 | 9 | 15 | 50 | 0 | 5,7 | 300 | 62 | 215 | 60 | 2,5 | 1 |
| 4 | 9 | 55 | 50 | 0 | 5,7 | 302 | 81 | 160 | 83 | 3 | 0,5-1 |
| 5 | 9 | 55 | 100 | 3,3 | 5,7 | 301 | 40 | 150 | 58 | 2 | 0,5-1 |
| 6 | 16 | 35 | 50 | 0 | 0 | 300 | 72 | 175 | 70 | 2 | 0,5-1 |
| 7 | 16 | 35 | 100 | 0 | 0 | 301 | 46 | 175 | 75 | 2 | 0,5-1 |
| 8 | 16 | 35 | 100 | 3,3 | 0 | 301 | 42 | 175 | 85 | 1 | 0,5-1 |

## TABLEAU (I)

Dans ce tableau et les suivants, T représente le temps d'écoulement, V le vide final (voir exemple comparatif 1), pds. représente le poids déposé sur la grille, E représente l'épaisseur du dépôt et $\varrho$ la résistivité.

### EXEMPLES 9 à 13

Préparation de matériau microporeux électroconducteur selon l'invention

On prépare de la même manière que dans l'exemple comparatif 1 un matériau microporeux électroconducteur à partir d'une suspension comprenant :
- 5, 10, 50 ou 100 g de fibres de titanate de potassium de diamètre 0,2 à 1,5 mm et de longueur de 10 à 20 mm,
- 30 g de fibres de PTFE introduites sous forme d'un mélange de chlorure de sodium et de fibres de PTFE (50/50 en poids) traitées au préalable, comme décrit précédemment,
- 70 g de fibres de carbone dont le diamètre est d'environ 10 mm et dont la longueur moyenne est de 1,5 mm,
- 15 ou 35 g de polytétrafluoroéthylène sous forme de latex à environ 65 % en poids d'extrait sec,
- 50 ou 100 g de silice précipitée sous forme de particules de granulométrie moyenne de 3 mm et dont la surface B.E.T. est de 250 m2.g-1,
- du nickel de Raney à 70 % de matières sèches environ,
- 9 g de gomme xanthane (Rhodopol ® 23 commercialisé par Rhône-Poulenc), ce qui correspond respectivement à 0,06 % de titre massique dans l'eau,
- 2 g de triton X 100 ® de la société Rohm et Haas.

Les caractéristiques du dépôt de la suspension sont rassemblées dans le tableau suivant (II).

| composition de la suspension | | | | | | conditions de dépôt | | | caractéristiques | |
|---|---|---|---|---|---|---|---|---|---|---|
| ex. | fibres titanate (g) | latex PTFE (g) | silice (g) | triton (g) | Ni de Raney (g) | Pds (g) | taux d'arrêt (%) | T (s) | V (mbar) | E (mm) | $\varrho$ ($\Omega$.cm) |
| 9 | 5 | 15 | 50 | 2 | 6,3 | 300 | 55 | 220 | 100 | 2,5 | 7 |
| 10 | 10 | 15 | 50 | 2 | 6,3 | 302 | 52 | 215 | 80 | 2,5 | 9 |
| 11 | 10 | 15 | 50 | 2 | 6,3 | 300 | 60 | 195 | 100 | 2,5 | 13 |
| 12 | 50 | 35 | 100 | 2 | 3 | 330 | 51 | 220 | 200 | 1,4 | 0,5-2 |
| 13 | 100 | 35 | 100 | 2 | 2,6 | 330 | 37 | 220 | 200 | 1,4 | 6 |

TABLEAU (II)

Ces exemples montrent que l'ajout de fibres minérales inertes, telles que des fibres de titanate dans des matériaux microporeux est nécessaire pour obtenir un dépôt viable industriellement. En effet, les temps d'écoulement et les vides finaux obtenus sont amenés au niveau de ceux mesurés lors de la fabrication du matériau avec fibres d'amiante décrit dans l'exemple comparatif 1 (à la différence des exemples 3 à 8 pour lesquels le temps d'écoulement reste insuffisant et le vide final trop faible).

**EXEMPLE COMPARATIF 14**

Préparation de matériau microporeux électroconducteur sans xanthane

On prépare de la même manière que dans l'exemple comparatif 1 un matériau microporeux électroconducteur à partir d'une suspension comprenant :
- 50 g de fibres de titanate de potassium de diamètre 0,2 à 1,5 mm et de longueur de 10 à 20 mm,
- 30 g de fibres de PTFE introduites sous forme d'un mélange de chlorure de sodium et de fibres de PTFE (50/50 en poids) traitées au préalable, comme décrit ci-avant,
- 70 g de fibres de carbone dont le diamètre est d'environ 10 mm et dont la longueur moyenne est de 1,5 mm,
- 35 g de polytétrafluoroéthylène sous forme de latex à environ 65 % en poids d'extrait sec,
- 100 g de silice précipitée sous forme de particules de granulométrie moyenne de 3 mm et dont la surface B.E.T. est de 250 $m^2.g^{-1}$,
- 3 g du nickel de Raney à 70 % de matières sèches environ,
Les caractéristiques du dépôt de la suspension sont les suivantes :
- le poids de la suspension filtrée est 330 g,
- le temps d'écoulement est de 120 s,
- le taux d'arrêt est d'environ 50%,
- le vide final est de 163 mbar,
- l'épaisseur est de 1,3 à 1,5 mm,
- la résistivité électrique est de 10 $\Omega$.cm.

**EXEMPLES 15 et 16**

Préparation de matériau microporeux électroconducteur selon l'invention

On reprend les conditions de l'exemple 12 décrit précédemment, seule la quantité de nickel de Raney est modifiée. Dans la suspension, on introduit 5 (exemple 15) ou 2,5 (exemple 16) g de nickel de Raney. Avec la grille, le matériau microporeux électroconducteur constitue un élément cathodique sans amiante selon l'invention.

Préparation de l'association de l'élément cathodique sans amiante et d'un diaphragme sans amiante

On reprend les conditions de l'exemple comparatif 1 pour obtenir cette association.
Les performances de ces associations sont rassemblées dans le tableau suivant (III).

| Ex. | matériau microporeux | diaphragme | Performances en électrolyse | | | | | |
|---|---|---|---|---|---|---|---|---|
| | pds $(Kg/m^2)$ | pds $(Kg/m^2)$ | NaOH (g/l) | RF (%) | $\Delta U$ (Volt) | $\Delta U_{I \to 0}$ (Volt) | kwh/TCl$_2$ | H$_2$ (%) dans le chlore |
| 15 | 0,28 | 1,95 | 120 | 98,5 | 3,05 | 2,19-2,20 | 2340 | < 0,2 |
| | | | 140 | 96 | 3,05 | 2,19-2,20 | 2400 | < 0,2 |
| | | | 160 | 92 | 3,05 | 2,19-2,20 | 2500 | < 0,2 |
| | | | 180 | 88 | 3,05 | 2,19-2,20 | 2620 | < 0,2 |
| | | | 200 | 86 | 3,05 | 2,19-2,20 | 2680 | < 0,2 |
| 16 | 0,34 | 1,97 | 120 | 98 | 3,2 | 2,20-2,22 | 2465 | < 0,2 |
| | | | 140 | 95 | 3,2 | 2,20-2,22 | 2540 | < 0,2 |
| | | | 160 | 92 | 3,2 | 2,20-2,22 | 2625 | < 0,2 |
| | | | 180 | 88 | 3,2 | 2,20-2,22 | 2745 | < 0,2 |
| | | | 200 | 86 | 3,2 | 2,20-2,22 | 2810 | < 0,2 |
| 1 | 0,35 | 2 | 120 | 98,5 | 3,05 | 2,19-2,20 | 2340 | < 0,2 |
| | | | 140 | 96 | 3,05 | 2,19-2,20 | 2400 | < 0,2 |
| | | | 160 | 92 | 3,05 | 2,19-2,20 | 2500 | < 0,2 |
| | | | 180 | 88 | 3,05 | 2,19-2,20 | 2620 | < 0,2 |
| | | | 200 | 86 | 3,05 | 2,19-2,20 | 2680 | < 0,2 |

TABLEAU (III)

On note que les performances des associations selon l'invention sont satisfaisantes tout en présentant des faibles teneurs en hydrogène dans le chlore. Ces performances sont comparables à une association d'élément cathodique et de diaphragme avec amiante (exemple comparatif 1).

**Revendications**

1.  Matériau microporeux électroconducteur comprenant une nappe fibreuse, dépourvue d'amiante, caractérisé en ce que ladite nappe comprend des fibres de carbone ou de graphite, des fibres de polytétrafluoroéthylène, des fibres minérales inertes, au moins un polymère fluoré liant des fibres et le cas échéant, au moins un épaississant.

2. Procédé de préparation de matériau microporeux électroconducteur, caractérisé en ce qu'il comprend les étapes suivantes :

    a) préparation d'une suspension aqueuse comprenant environ :

        . 100 parties en poids sec d'un mélange de fibres constitué par 20 à 80 parties en poids sec de fibres de carbone ou de graphite et par 80 à 20 parties en poids sec de fibres de polytétrafluoroéthylène;

        . 10 à 100 parties en poids sec de fibres minérales inertes;

        . 10 à 60 parties en poids sec de polymère fluoré liant des fibres;

        . 30 à 200, de préférence de 30 à 100, parties en poids sec de dérivés à base de silice;

        . 0 à 30 parties en poids sec d'au moins un épaississant;

    b) dépôt d'une nappe par filtration sous vide programmé de ladite suspension à travers un support poreux;

    c) élimination du milieu liquide et séchage de la nappe ainsi formée;

    d) frittage de la nappe;

    e) élimination des dérivés à base de silice.

3. Procédé selon la revendication 2, caractérisé en ce que le mélange de fibres de carbone ou de graphite et de fibres de polytétrafluoroéthylène est constitué par 60 à 80 parties en poids sec de fibres de carbone ou de graphite et par 40 à 20 parties en poids sec de fibres de polytétrafluoroéthylène.

4. Procédé selon l'une des revendications 2 ou 3, caractérisé en ce que la quantité de fibres minérales inertes est comprise entre 20 et 60 parties en poids sec.

5. Procédé selon l'une des revendications 2 à 4, caractérisé en ce que la quantité d'épaississant est comprise entre 0 et 10 parties en poids sec.

6. Procédé selon l'une des revendications 2 à 5, caractérisé en ce que la suspension aqueuse préparée à l'étape a) est une suspension à environ 2 à 5 % en poids de matière sèche.

7. Procédé selon l'une des revendications 2 à 6, caractérisé en ce que les fibres de polytétrafluoroéthylène présentent un diamètre (D) compris entre 10 et 500 $\mu$m et une longueur (L) telle que le rapport L/D soit compris entre 5 et 500.

8. Procédé selon la revendication précédente, caractérisé en ce que les fibres de polytétrafluoroéthylène présentent des dimensions moyennes comprises entre 1 et 10 mm pour la longueur et entre 50 et 200 $\mu$m pour le diamètre.

9. Procédé selon l'une des revendications 2 à 8, caractérisé en ce que les fibres de carbone ou de graphite se présentent sous forme de filaments dont le diamètre est inférieur à 1 mm et, de préférence, compris entre $10^{-5}$ et 0,1 mm et dont la longueur est supérieure à 0,5 mm et, de préférence, comprise entre 1 et 20 mm.

10. Procédé selon l'une des revendications 2 à 9, caractérisé en ce que les fibres de carbone ou de graphite présentent une distribution de longueurs monodispersées.

11. Procédé selon l'une des revendications 2 à 10, caractérisé en ce que les fibres minérales inertes sont choisies parmi des fibres de titanate, des fibres de sulfoaluminate de calcium, des fibres céramiques, des fibres de suboxydes de titane de formule chimique générale $Ti_nO_{2n-1}$ avec n, nombre entier, compris entre 4 et 10, seules ou en mélange.

12. Procédé selon la revendication précédente, caractérisé en ce que les fibres minérales inertes sont des fibres de titanate.

13. Procédé selon l'une des revendications 2 à 12, caractérisé en ce que la suspension préparée à l'étape a) comprend des fibres de cellulose auxquelles on a donné une charge ionique positive.

14. Procédé selon la revendication précédente, caractérisé en ce que la quantité de fibres de cellulose est de 0 à 100 parties en poids sec.

15. Procédé selon l'une des revendications 2 à 14, caractérisé en ce que l'épaississant est un polysaccharide naturel ou synthétique.

16. Procédé selon la revendication précédente, caractérisé en ce que l'épaississant est une gomme xanthane.

17. Procédé selon l'une quelconque des revendications 2 à 16, caractérisé en ce que les polymères fluorés sont des polymères et copolymères dérivés de tétrafluoroéthylène, hexafluoropropylène, chlorotrifluoroéthylène, bromotrifluoroéthylène, ces polymères pouvant également comprendre jusqu'à 75 % molaire de motifs dérivés d'autres monomères éthyléniquement insaturés contenant au moins autant d'atomes de fluor que d'atomes de carbone, comme par exemple le (di)fluorure de vinylidène, les esters de vinyle et de perfluoroalkyle, tel que le perfluoroalcoxyéthylène.

18. Procédé selon la revendication précédente, caractérisé en ce que le polymère fluoré est un polytétrafluoroéthylène.

19. Procédé selon l'une quelconque des revendications 2 à 18, caractérisé en ce que on ajoute, lors de la préparation de la suspension à l'étape a), au moins un tensioactif.

20. Procédé selon la revendication précédente, caractérisé en ce que la quantité maximale de tensioactif présent est de 10 parties en poids sec, de préférence la quantité de tensioactif est comprise entre 0,5 et 5 parties en poids sec.

21. Procédé selon l'une quelconque des revendications 2 à 20, caractérisé en ce que le support poreux est un support métallique.

22. Matériau microporeux électroconducteur selon la revendication 1, caractérisé en ce qu'il est susceptible d'être obtenu par le procédé selon l'une quelconque des revendications 2 à 21.

23. Elément cathodique, caractérisé en ce qu'il comprend une structure rigide électroconductrice sur laquelle se trouve le matériau microporeux électroconducteur selon la revendication 22.

24. Elément cathodique selon la revendication précédente, caractérisé en ce que la structure rigide électroconductrice est le support poreux utilisé lors de la préparation du matériau microporeux électroconducteur selon la revendication 22.

25. Association de l'élément cathodique selon l'une des revendications 23 ou 24 avec un diaphragme ou une membrane.

26. Association selon la revendication précédente, caractérisée en ce que le diaphragme est un diaphragme sans amiante.

27. Utilisation de l'association selon l'une des revendications 25 ou 26 dans une cellule d'électrolyse de solutions d'halogénures alcalins.

Office européen
des brevets

**RAPPORT DE RECHERCHE EUROPEENNE**

Numero de la demande
EP 94 40 1401

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| D,X | EP-A-0 412 917 (RHONE-POULENC CHEMIE)<br><br>* abrégé; revendications 1,2,8-20 *<br>* page 3, ligne 29 - page 4, ligne 43 *<br>* page 5, ligne 8 - ligne 37 *<br>* page 6, ligne 5 - ligne 46 *<br>* page 7, ligne 20 - page 8, ligne 6; exemple 1 * | 1-12, 15-19, 21-24,27 | C04B26/08<br>C25B11/03<br>C25B11/04 |
| Y | | 25,26 | |
| D,Y | EP-A-0 222 671 (RHONE-POULENC CHEMIE DE BASE)<br>* abrégé; revendications 1-11 *<br>* page 2, ligne 4 - page 3, ligne 21 *<br>* page 6, ligne 1 - ligne 47 *<br>* page 8, ligne 58 - page 9, ligne 47 * | 25,26 | |
| X | EP-A-0 132 425 (ATOCHEM)<br><br>* abrégé; revendications 1-4,6-8,10-13,18-21 *<br>* page 3, ligne 6 - page 4, ligne 26 *<br>* page 5, ligne 13 - page 6, ligne 17 *<br>* page 7, ligne 23 - page 8, ligne 38 *<br>* page 8, ligne 32 - ligne 35 *<br>* page 10, ligne 30 - page 11, ligne 6 *<br>* page 21, ligne 1 - page 22, ligne 7 * | 1-4,7-9, 11,15, 18-24,27 | **DOMAINES TECHNIQUES RECHERCHES (Int.Cl.5)**<br><br>C04B<br>C25B |

Le présent rapport a été établi pour toutes les revendications

| Lieu de la recherche | Date d'achèvement de la recherche | Examinateur |
|---|---|---|
| LA HAYE | 23 Septembre 1994 | Olsson-Norgren, S |